# EUROPÄISCHE PATENTSCHRIFT

(11) **EP 2 271 691 B1**
(45) Veröffentlichungstag und Bekanntmachung des Hinweises auf die Patenterteilung: **04.03.2015**
(21) Anmeldenummer: 09735539.0
(22) Anmeldetag: 24.04.2009
(51) Int. Cl.: C08G 18/48, C08G 18/71, C09J 175/04

(54) **HÄRTBARE ZUSAMMENSETZUNGEN ENTHALTEND SILYLIERTE POLYURETHANE AUF BASIS VON POLYETHERBLOCKPOLYMEREN**
CURABLE COMPOSITIONS CONTAINING SILYLATED POLYETHER BLOCK POLYMER-BASED POLYURETHANES
COMPOSITIONS DURCISSABLES CONTENANT DES POLYURÉTHANES SILYLÉS À BASE DE POLYMÈRES SÉQUENCÉS

(30) Priorität: 25.04.2008 DE 102008020980
(43) Veröffentlichungstag der Anmeldung: 12.01.2011
(73) Patentinhaber: Henkel AG & Co. KGaA, 40589 Düsseldorf (DE)
(72) Erfinder: BACHON, Thomas, 40597 Düsseldorf (DE); ZANDER, Lars, 41569 Rommerskirchen (DE); GONZALEZ, Sara, 08172 Barcelona (ES); KUNZE, Christiane, 51061 Köln (DE); KLEIN, Johann, 40593 Düsseldorf (DE); BRAUN, Daniela, Shanghai 200120 (CN)
(86) Internationale Anmeldenummer: PCT/EP2009/054940
(87) Internationale Veröffentlichungsnummer: WO 2009/130297

(56) Entgegenhaltungen:
- EP-A1- 0 931 800
- EP-A1- 1 803 757
- EP-A2- 0 372 561
- WO-A2-02/12364
- CN-A- 1 986 599
- DE-A1-102004 018 548
- US-A- 3 487 115

## Beschreibung

Die vorliegende Erfindung betrifft silanvernetzende, härtbare Zusammensetzungen, deren Herstellung und Verwendung in Kleb- und Dichtstoffen und Beschichtungsmitteln.

Polymersysteme, die über reaktive Alkoxysilylgruppen verfügen, sind bekannt. In Gegenwart von Luftfeuchtigkeit sind diese alkoxysilanterminierten Polymere bereits bei Raumtemperatur in der Lage, unter Abspaltung der Alkoxygruppen miteinander zu kondensieren. Je nach Gehalt an Alkoxysilylgruppen und deren Aufbau bilden sich dabei hauptsächlich langkettige Polymere (Thermoplaste), relativ weitmaschige dreidimensionale Netzwerke (Elastomere) oder hochvernetzte Systeme (Duroplaste).

Die Polymere weisen in der Regel ein organisches Grundgerüst auf, das an den Enden Alkoxysilylgruppen trägt. Bei dem organischen Grundgerüst kann es sich beispielsweise um Polyurethane, Polyester, Polyether etc. handeln.

Einkomponentige, feuchtigkeitshärtende Kleb- und Dichtstoffe spielen seit Jahren eine bedeutende Rolle bei zahlreichen technischen Anwendungen. Neben den Polyurethan-Kleb- und Dichtstoffen mit freien Isocyanatgruppen und den traditionellen Silikon- Kleb- und Dichtstoffen auf der Basis von Dimethylpolysiloxanen sind in letzter Zeit auch verstärkt die so genannten modifizierten Silan-Kleb- und Dichtstoffe eingesetzt worden. Bei der letztgenannten Gruppe ist der Hauptbestandteil des Polymerrückgrades ein Polyether und die reaktiven und vernetzungsfähigen Endgruppen sind Alkoxysilylgruppen. Gegenüber den Polyurethan-Kleb- und Dichtstoffen weisen die modifizierten Silan-Kleb- und Dichtstoffe den Vorteil der Freiheit von Isocyanatgruppen, insbesondere von monomeren Diisocyanaten auf, weiterhin zeichnen sie sich durch ein breites Haftspektrum auf einer Vielzahl von Substraten ohne Oberflächenvorbehandlung durch Primer aus.

US 4,222,925 A und US 3,979,344 A beschreiben bereits bei Raumtemperatur härtbare siloxanterminierte organische Dichtstoffzusammensetzungen auf der Basis von Umsetzungsprodukten von Isocyanat-terminierten Polyurethan-Prepolymeren mit 3-Aminopropyltrimethoxysilan beziehungsweise 2-Aminoethyl-, 3-Aminopropylmethoxysilan zu isocyanatfreien siloxanterminierten Prepolymeren. Kleb- und Dichtstoffe auf der Basis dieser Prepolymeren weisen jedoch unbefriedigende mechanische Eigenschaften, insbesondere in Bezug auf ihre Dehnung und Reißfestigkeit auf.

Für die Herstellung von silanterminierten Prepolymeren auf der Basis von Polyethern sind die nachfolgend aufgeführten Verfahren bereits beschrieben worden:
- Copolymerisation von ungesättigten Monomeren mit solchen die Alkoxysilylgruppen aufweisen, wie z.B. Vinyltrimethoxysilan.
- Aufpfropfung von ungesättigten Monomeren wie Vinyltrimethoxysilan auf Thermoplaste wie Polyethylen.
- Hydroxyfunktionelle Polyether werden mit ungesättigten Chlorverbindungen, z.B. Allylchlorid, in einer Ethersynthese in Polyether mit endständigen olefinischen Doppelbindungen umgesetzt, die ihrerseits mit Hydrosilanverbindungen, die hydrolysierbare Gruppen haben, wie z.B. HSi(OCH₃)₃ in einer Hydrosilylierungsreaktion unter dem katalytischen Einfluss von beispielsweise Übergangsmetallverbindungen der 8. Gruppe zu silanterminierten Polyethern umgesetzt werden.
- In einem anderen Verfahren werden die olefinisch ungesättigte Gruppen enthaltenden Polyether mit einem Mercaptosilan wie z.B. 3-Mercaptopropyltrialkoxysilan umgesetzt.
- Bei einem weiteren Verfahren werden zunächst Hydroxylgruppen-haltige Polyether mit Di- oder Polyisocyanaten umgesetzt, die dann ihrerseits mit aminofunktionellen Silanen oder mercaptofunktionellen Silanen zu silanterminierten Prepolymeren umgesetzt werden.
- Eine weitere Möglichkeit sieht die Umsetzung von hydroxyfunktionellen Polyethern mit isocyanatofunktionellen Silanen wie z.B. 3-Isocyanatopropyltrimethoxysilan vor.

Diese Herstellverfahren und die Verwendung der oben genannten silanterminierten Prepolymeren in Kleb-/Dichtstoffanwendungen sind beispielsweise in den folgenden Patentschriften genannt: US-A-3971751, EP-A-70475, DE-A-19849817, US-A-6124387, US-A-5990257, US-A-4960844, US-A-3979344, US-A-3632557, DE-A-4029504, EP-A-601021 oder EP-A-370464.

EP-A-0931800 beschreibt die Herstellung von silylierten Polyurethanen durch Umsetzung einer Polyolkomponente mit einer endständigen Ungesättigtheit von weniger als 0,02 meq/g mit einem Diisocyanat zu einem Hydroxyl-terminierten Prepolymer, das anschließend mit einem Isocyanatosilan der Formel OCN-R-Si-(X)ₘ(-OR¹)₃₋ₘ wobei m 0,1 oder 2 ist und jeder R¹-Rest eine Alkylgruppe mit 1 bis 4 C-Atomen und R eine difunktionelle organische Gruppe ist. Gemäß der Lehre dieser Schrift wiesen derartige silylierte Polyurethane eine überlegene Kombination aus mechanischen Eigenschaften auf, die in vernünftigen Zeiträumen zu einem wenig klebrigen Dichtstoff aushärten, ohne eine übermäßige Viskosität aufzuweisen.

WO-A-2003 066701 offenbart Alkoxysilan- und OH-Endgruppen aufweisende Polyurethanprepolymere auf Basis von hochmolekularen Polyurethanprepolymeren mit erniedrigter Funktionalität zur Verwendung als Bindemittel für niedermodulige Dichtstoffe und Klebstoffe. Dazu soll zunächst ein Polyurethanprepolymer aus einer Diisocyanatkomponente mit einem NCO-Gehalt von 20 bis 60% und einer Polyolkomponente, umfassend ein Polyoxyalkylendiol mit einem Molekulargewicht zwischen 3000 und 20000 als Hauptkomponente, umgesetzt werden, wobei die Umsetzung bei einem Umsatz von 50 bis 90% der OH-Gruppen gestoppt werden soll. Dieses Reaktionsprodukt soll anschließend mit einer Alkoxysilan- und Aminogruppen aufweisenden Verbindung weiter umgesetzt werden. Durch diese Maßnahmen sollen Prepolymere mit verhältnismäßig geringer mittlerer Molekülmasse und niedriger Viskosität erhalten werden, die die Erreichung eines hohen Eigenschaftsniveaus gewährleisten sollen.

Aus WO-A-2005 042605 sind feuchtigkeitshärtende Alkoxysilan-funktionelle Polyetherurethan-Zusammensetzungen bekannt, die 20 bis 90 Gew.% eines Polyetherurethans A mit zwei oder mehr reaktiven Silangruppen und 10 bis 80 Gew.% eines Polyetherurethans B mit einer reaktiven Silangruppe enthalten. Das Polyetherurethan A soll dabei Polyethersegmente mit einem zahlenmittleren Molekulargewicht (Mₙ) von mindestens 3000 und einer Ungesättigtheit von weniger als 0,04 meq/g aufweisen, und die reaktiven Silangruppen sollen durch Reaktion einer isocyanatreaktiven Gruppe mit einer Verbindung der Formel OCN-Y-Si-(X)₃ eingefügt werden. Das Polyetherurethan B soll ein oder mehrere Polyethersegmente mit einem zahlenmittleren Molekulargewicht (Mₙ) von 1000 bis 15000 aufweisen und die reaktiven Silangruppen sollen durch Reaktion einer Isocyanatgruppe mit einer Verbindung der Formel HN(R₁)-Y-Si-(X)₃ eingefügt werden. R₁ ist dabei eine Alkyl-, Cycloalkyl- oder aromatische Gruppe mit 1 bis 12 C-Atomen, X eine Alkoxygruppe und Y ein lineares Radikal mit 2 bis 4 C-Atomen oder ein verzweigtes Radikal mit 5 bis 6 C-Atomen.

Zur Reduzierung der Funktionalität und damit der Vernetzungsdichte von feuchtigkeitshärtenden alkoxysilanterminierten Polyurethanen schlägt WO-A-92/05212 die Mitverwendung von monofunktionellen Isocyanaten im Gemisch mit Diisocyanaten bei der Synthese vor. Monoisocyanate haben bekanntlich einen sehr hohen Dampfdruck und sind wegen ihrer Toxizität in arbeitshygienischer Sicht bedenkliche Einsatzstoffe.

EP-A-1396513 beschreibt eine bei Raumtemperatur härtende Zusammensetzung, welche ein Polyoxyalkylenpolymer (A) mit einem Molekulargewicht von 8000 bis 50000 (berechnet aus der Hydroxylzahl) enthält, das hydrolysierbare Siliziumgruppen der Formel -SiXₐR¹₃₋ₐ aufweist. Darin ist X eine Hydroxylgruppe oder eine hydrolysierbare Gruppe, a ist 1, 2, oder 3 und R¹ ist eine C₁₋₂₀ substituierte oder unsubstituierte einwertige organische Gruppe. Die Zusammensetzung soll dabei sowohl Polyoxyalkylenpolymere (A) enthalten, bei denen a 1 oder 2 ist, als auch solche, bei denen a 3 ist. Wenn mehr als ein R¹ vorhanden ist, kann die Mehrzahl von R¹ gleich oder unterschiedlich sein, und wenn mehr als ein X vorhanden ist, kann die Mehrzahl von X gleich oder unterschiedlich sein. Die bei Raumtemperatur härtende Zusammensetzung soll als Dichtungsmasse, Imprägnierungsmittel, Klebstoff oder Beschichtungsmittel verwendbar sein.

WO-A-2005 047394 offenbart vernetzbare Zusammensetzungen, die unter Verwendung eines Gemisches aus zwei oder mehreren Polyolen herstellbar sind, hierzu sollen mindestens zwei unterschiedliche Polyoxyalkylene eingesetzt werden, wobei mindestens eine erste Oxyalkyleneinheit mindestens zwei C-Atome zwischen zwei benachbarten Sauerstoffatomen aufweist und mindestens eine zweite Oxyalkyleneinheit mindestens ein C-Atom mehr zwischen zwei benachbarten Sauerstoffatomen aufweist als die erste Oxyalkyleneinheit. Beispielsweise wird die Umsetzung eines Gemisches aus Polypropylenglycol und Poly-THF mit Toluylendiisocyanat und nachfolgender Umsetzung mit Isocyanatopropyltrimethoxysilan zu einem feuchtigkeitshärtenden Polymer beschrieben.

Es besteht weiterhin das Bedürfnis nach isocyanatfreien Zusammensetzungen zur Herstellung von 1 K- oder 2K- Kleb- und Dichtstoffen oder Beschichtungsmitteln, die eine akzeptable Härtungszeit und nach Aushärtung eine besonders gute Elastizität und Dehnbarkeit aufweisen. Ferner besteht der Wunsch nach einer effizienten Syntheseroute und nach Zusammensetzungen, die keine Restklebrigkeit aufweisen.

Aufgabe der vorliegenden Erfindung ist es daher, isocyanatfreie vernetzbare Zusammensetzungen bereitzustellen, die eine hohe Elastizität und eine gute Festigkeit bei sehr niedrigem E-Modul aufweisen. Ferner ist eine anwenderfreundliche Härtungszeit erwünscht.

Die erfindungsgemäße Lösung der Aufgabe ist den Patentansprüchen zu entnehmen. Sie besteht im wesentlichen in der Bereitstellung eines Verfahrens zur Herstellung eines silylierten Polyurethans, umfassend das Umsetzen mindestens einer Polyetherverbindung mit einer OH Zahl nach DIN 53783 zwischen 3 und 20 mg KOH/g, bestehend aus mindestens zwei Polyoxyalkylenblöcken A und B, wobei sich die Anzahl der Kohlenstoffatome in den Alkyleneinheiten der Blöcke A und B um mindestens 1 unterscheidet, mit einem oder mehreren Isocyanatosilanen der Formel (I):

OCN=R=Si-(R¹)ₘ(-OR²)₃₋ₘ (I)

worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, um die Hydroxylgruppen der Polyetherverbindung mit dem Isocyanatosilan zu verkappen, das dadurch gekennzeichnet ist, dass der erste Polyetherblock B Polyoxytetramethylen- und der zweite Block A Polyoxypropyleneinheiten enthält.

Die Erfindung betrifft auch ein silyliertes Polyurethan, das hergestellt wird durch Umsetzen mindestens einer Polyetherverbindung mit einer OH Zahl nach DIN 53783 zwischen 3 und 20 mg KOH/g bestehend aus mindestens zwei Polyoxyalkylenblöcken A und B, wobei sich die Anzahl der Kohlenstoffatome in den Alkyleneinheiten der Blöcke A und B um mindestens 1 unterscheidet, mit einem oder mehreren Isocyanatosilanen der Formel (I):

OCN-R-Si-(R¹)ₘ(-OR²)₃₋ₘ (I)

worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, um die Hydroxylgruppen des Prepolymers mit dem Isocyanatosilan zu verkappen, wobei der erste Polyetherblock B Polyoxytetramethylen- und der zweite Block A Polyoxypropyleneinheiten enthält, wodurch ein silyliertes Polyurethan gebildet wird, das Alkoxysilylgruppen als reaktive Endgruppen aufweist.

"Silylierte-Polyurethane" im Sinne dieser Erfindung sind auch solche Verbindungen, die pro Molekül mehr als eine, aber weniger als drei Urethangruppen pro Molekül aufweisen.

Besonders.bevorzugt sind Polyetherverbindungen des Blockcopolymertyps A-B-A einsetzbar.

In einer weiteren bevorzugten Ausführungsform der vorliegenden Erfindung weist die Polyetherverbindung eine OH-Zahl zwischen 6 und 12 mg KOH/g auf.

In einer weiteren bevorzugten Ausführungsform der vorliegenden Erfindung sind die Polyoxyalkylenblöcke A und B durch Etherbindungen miteinander verbunden. Dies führt vorteilhaft zu einer verbesserten Elastizität der Polyetherverbindung und damit auch des erfindungsgemäßen silylierten Polyurethans im Vergleich zu einer Verknüpfung über z. B. Ester- öder Urethangruppen. Diese beiden letztgenannten Gruppen bilden Wasserstoff-Brückenbindungen aus, wodurch die Elastizität der Polymere erniedrigt wird. Unter einer Etherbindung wird im Rahmen der vorliegenden Erfindung die Verknüpfung zweier organischer Reste über ein Sauerstoff-Atom verstanden, so dass ein Strukturelement der Form R^{b}-O-R^{b} vorliegt. In dieser lediglich zu Erläuterungszwecken aufgeführten struktur steht R^{b} (b = beliebig) für einen beliebigen organischen Rest.

Gegebenenfalls kann die Polyetherverbindung, bestehend aus mindestens zwei Polyoxy-alkylenblöcken A und B, in einer vorgelagerten Reaktion mit einem Diisocyanat bei einem stöchiometrischen Überschuss der Polyolverbindungen gegenüber der Diisocyanatverbindung zu einem Polyurethan-Prepolymer umgesetzt werden, das Hydroxyl-terminiert ist. Dieses wird dann anschließend mit einem oder mehreren Isocyanatosilan(en) der Formel (I) zu einem silylierten Polyurethan mit sehr hohem Molekulargewicht weiter umgesetzt.

Eine bevorzugte Ausführungsform der vorliegenden Erfindung ist daher ein Verfahren zur Herstellung eines silylierten Polyurethans, das dadurch gekennzeichnet ist, dass das oder die Polyetherblockcopolymer(en) in einem ersten Schritt mit einem Diisocyanat bei einem stöchiometrischen Überschuss der Polyolverbindung(en) gegenüber der Diisocyanatverbindung zu einem Polyurethan-Prepolymer umgesetzt werden, das Hydroxyl-terminiert ist, welches in einem zweiten Schritt mit einem oder mehreren Isocyanatosilanen der Formel (I):

OCN-R-Si-(R¹)ₘ(-OR²)₃₋ₘ (I)

worin m 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, umgesetzt wird, um die Hydroxylgruppe der Polyetherverbindung mit dem Isocyanatosilan zu verkappen.

Ein weiterer Gegenstand der vorliegenden Erfindung ist eine feuchtigkeitshärtende Klebstoff-, Dichtstoff- oder Beschichtungs- Zubereitung und deren Verwendung, die ein oder mehrere silylierte Polyurethan(e) der vorgenannten Art enthält. Zusätzlich zu den erfindungsgemäßen silylierten Polyurethanen kann diese Zubereitung noch Weichmacher, Füllstoffe, Katalysatoren und weitere Hilfs- und Zusatzstoffe enthalten.

Die für die erfindungsgemäße Umsetzung mit Isocyanatosilanen erforderliche Polyetherverbindung besteht aus mindestens zwei Polyoxyalkylenblöcken A und B, vorzugsweise besitzt diese Polyetherverbindung jedoch eine Triblockstruktur vom Typ A-B-A. Herstellbar ist ein derartiges Polyoxyalkylenblockcopolymer aus einer mindestens bifunktionellen Polyetherverbindung B mit zwei terminalen Hydroxylgruppen, auf die entweder an einem Ende oder vorzugsweise an beiden Enden der Polyoxyalkylenblock A aufpolymerisiert wird.

Als Startverbindung B sind geeignet Polytetramethylenglykol (auch "Poly-THF" genannt). Auf dieses Polyoxyalkylendiol bzw. Polyalkylendiol B wird dann in an sich bekannter Weise Propylenoxyd aufpolymerisiert.

In einer bevorzugten Ausführungsform der vorliegenden Erfindung bestehen daher innerhalb einer Triblockstruktur vom Typ A-B-A derPolyetherverbindung die beiden äußeren Blöcke A aus Polypropylenoxid. Polypropylenoxid-Blöcke lassen sich besonders vorteilhaft unter DMC-Katalyse aufbauen, wodurch Polyether mit hohen Molekulargewichten bei gleichzeitig niedriger Polydispersität und niedriger terminaler Ungesättigtheit erhalten werden. Dies schlägt sich in relativ niedrigen Viskositäten und damit in einer guten Verarbeitbarkeit der erfindungsgemäßen silylierten Polyurethane nieder. Der zentrale Block B besteht aus Polyoxytetramethylen (Poly-THF). Die Blöcke sind vorzugsweise durch Etherbindungen miteinander verbunden.

Das Starterpolyol B hat dabei ein mittleres Molekulargewicht von 500 bis 10.000, vorzugsweise liegt der mittlere Molekulargewichtsbereich des Starterblockes B zwischen 1.000 und 4.000 Dalton.

Besonders vorteilhafte viskoelastische Eigenschaften der herzustellenden silylierten Polyurethane werden erreicht, wenn die auf das Starterpolyol B aufpolymerisierten Polyoxyalkylen-Polymerblöcke A eine enge Molmassenverteilung und damit eine niedrige Polydispersität besitzen. Dies kann beispielsweise dadurch erreicht werden, dass als Alkoxylierungskatalysator ein sogenannterdouble-metal-cyanate-catalysator (DMC-Katalysator) verwendet wird. Beispiele für derartige DMC-Katalysatoren sind Zinkhexacyanokobaltat (II), Zinkhexacyanoferrat (III), Zinkhexacyanoferrat (II), Nickel (II) - hexacyanoferrat (II) und Kobalt (II) - hexacyanokobaltat (III). Derartige DMC-Katalysatoren sind beispielsweise in der WO 2006/100219 A1 und der dort zitierten Literatur beschrieben. Ganz besonders eignen sich für das erfindungsgemäße Aufpolymerisieren der Polyoxyalkylen-Polymerblöcke A die aus der US 4477589 bzw. US 4472560 bekannten DMC-Katalysatoren mit der allgemeinen Formel

M¹ₐ[M²(CN)_{b}(A)_{c}]_{d}·w M³Dₑ·x H₂O·y L·z HₙEₘ (II)

in der M¹ mindestens ein zweiwertiges Metallatom ausgewählt aus Zn(II), Fe(II), Co(II), Ni(II), Mn(II), Cu(II), Sn(II) oder Pb(II) bedeutet und M² mindestens eines der zwei-, drei- vier- oder fünfwertigen Metalle Fe(II), Fe(III), Co(III), Cr(III), Mn(II), Mn(III), Ir(III), Rh(III), Ru(II), V(IV) oder V(V) ist. M³ kann dabei M¹ und/oder M² sein und A, D und E bedeuten jeweils ein Anion, die gleich oder verschieden sein können. L ist ein Lösemittelligand ausgewählt aus einem Alkohol, Aldehyd, Keton, Ether, Ester, Amid, Nitril oder Sulfid oder einem Gemisch daraus; a und d sind Zahlen, die der Wertigkeit von M¹ und M² in dem Doppelmetall-Cyanidteil der allgemeinen Formel (II) entsprechen; b und c bedeuten ganze Zahlen (mit b>c), die zusammen mit a und d die Elektroneutralität des Doppelmetall-Cyanidteils der allgemeinen Formel (II) ergeben; e ist eine ganze Zahl, die der Wertigkeit von M³ entspricht, n und m sind ganze Zahlen, die die Elektroneutralität von HE ergeben; w ist eine Zahl zwischen 0,1 und 4, x eine Zahl bis zu 20; y eine Zahl zwischen 0,1 und 6, und z eine Zahl zwischen 0,1 und 5.

Für das erfindungsgemäße Aufpolymerisieren der Polyoxyalkylen-Polymerblöcke A eignen sich ebenfalls die aus der CN1459332 bekannten DMC-Katalysatorkomplexe aus einem Doppelmetallcyanid der oben genannten Art, einem organischen Koordinationsagens, einem löslichen Metallsalz, einem Polyetherpolyol und einem organischen Polysiloxan.

Neben der durch diese Katalysatoren erzielbaren besonders engen Molmassenverteilung zeichnen sich die so hergestellten Blockcopolymere auch durch eine hohe erzielbare mittlere Molmasse sowie durch eine sehr niedrige Zahl an Doppelbindungen an den Enden der Polymerketten aus. Die derartig erfindungsgemäß aufpolymerisierbaren Polyetherblöcke A haben typischerweise eine geringe Polydispersität PD (M_{w}/Mₙ) von höchstens 2,5, vorzugsweise höchstens 2,0 und besonders bevorzugt zwischen 1,01 und 1,5, beispielsweise zwischen etwa 1,08 und 1,14. Zudem zeichnen sich die Produkte durch Ihre geringe terminale Ungesättigtheit aus, bestimmbar durch die Methode ASTM D4671, die unter 0,04 meq/g, insbesondere unter 0,02 meq/g und bevorzugt bei 0,01 meq/g liegt.

Die erfindungsgemäß einzusetzenden Blockcopolymere vom Typ A-B oder vorzugsweise vom Typ A-B-A haben Molekulargewichte zwischen 4.000 und 40.000 g/mol (Dalton), der Vorzugsbereich der Molekulargewichte liegt zwischen 6.000 und 20.000 Dalton, insbesondere zwischen 8.000 und 19.000 Dalton und ganz besonders zwischen 10.000 und 18.000 Dalton.

Unter dem Molekulargewicht Mₙ wird das zahlenmittlere Molekulargewicht des Polymeren verstanden, dieses kann, ebenso wie das gewichtsmittlere Molekulargewicht M_{w}, durch Gelpermeationschromatographie (GPC, auch SEC genannt) bestimmt werden. Dieses Verfahren ist dem Fachmann bekannt. Die Polydispersität leitet sich dabei aus dem Quotienten des mittleren Molekulargewichts M_{w} und Mₙ ab. Sie wird berechnet als PD = M_{w}/Mₙ.

Für die erfindungsgemäße Umsetzung der Polyetherblockcopolymeren vom Typ A-B oder A-B-A mit einem oder mehreren Isocyanatosilanen sind die nachfolgend aufgeführten Isocyanatosilane geeignet:
Methyldimethoxysilylmethylisocyanat, Ethyldimethoxysilylmethylisocyanat, Methyldiethoxysilylmethylisocyanat, Ethyldiethoxysilylmethylisocyanat, Methyldimethoxysilylethylisocyanat, Ethyldimethoxysilylethylisocyanat, Methyldiethoxysilylethylisocyanat, Ethyldiethoxysilylethylisocyanat, Methyldimethoxysilylpropylisocyanat, Ethyldimethoxysilyl-propylisocyanat, Methyldiethoxysilylpropylisocyanat, Ethyldiethoxysilylpropylisocyanat, Methyldimethoxysilylbutylisocyanat, Ethyldimethoxysilylbutylisocyanat, Methyldiethoxysilylbutylisocyanat, Diethylethoxysilylbutylisocyanat, Ethyldiethoxysilylbutylisocyanat, Methyldimethoxysilylpentylisocyanat, Ethyldimethoxysilylpentylisocyanat, Methyldiethoxysilylpentylisocyanat, Ethyldiethoxysilylpentylisocyanat, Methyldimethoxysilylhexylisocyanat, Ethyldimethoxysilylhexylisocyanat, Methyldiethoxysilylhexylisocyanat, Ethyldiethoxysilylhexylisocyanat, Trimethoxysilylmethylisocyanat, Triethoxysilylmethylisocyanat, Trimethoxysilylethylisocyanat, Triethoxysilylethylisocyanat, Trimethoxysilylpropylisocyanat (z.B. GF 40, Fa. Wacker), Triethoxysilylpropylisocyanat, Trimethoxysilylbutylisocyanat, Triethoxysilylbutylisocyanat, Trimethoxysilylpentylisocyanat, Triethoxysilylpentylisocyanat, Trimethoxysilylhexylisocyanat, Triethoxysilylhexylisocyanat.

Besonders bevorzugt werden Methyldimethoxysilylmethylisocyanat, Methyldiethoxysilylmethylisocyanat, Methyldimethoxysilylpropylisocyanat und Ethyldimethoxysilylpropylisocyanat oder deren Trialkoxyanaloga.

Das oder die Isocyanatosilan(e) werden dabei in mindestens stöchiometrischer Menge zu den Hydroxylgruppen des Polyols eingesetzt, bevorzugt wird jedoch ein geringer stöchiometrischer Überschuss der Isocyanatosilane gegenüber den Hydroxylgruppen des Polyols. Dieser stöchiometrische Überschuss beträgt zwischen 0,5 und 10, vorzugsweise zwischen 1,2 und 2 Equivalente Isocyanatgruppen bezogen auf die Hydroxylgruppen.

Für die Umwandlung der Polyetherverbindung bestehend aus mindestens je einem Polyoxyalkylenblock A und B in ein alternativ einzusetzendes Hydroxyl-terminiertes Polyurethan-Prepolymer können die folgenden Diisocyanate verwendet werden:
Ethylendiisocyanat, 1,4-Tetramethylendiisocyanat, 1,4-Tetramethoxybutandiisocyanat, 1,6-Hexamethylendiisocyanat (HDI), Cyclobutan-1,3-diisocyanat, Cyclohexan-1,3- und -1,4-diisocyanat, Bis(2-isocyanato-ethyl)fumarat, 1-Isocyanato-3,3,5-trimethyl-5-isocyanatomethylcyclohexan (Isophorondiisocyanat, IPDI), 2,4- und 2,6-Hexahydrotoluylendiisocyanat, Hexahydro-1,3-oder-1,4-phenylendiisocyanat, Benzidindiisocyanat, Naphthalin-1,5-diisocyanat, 1,6-Diisocyanato-2,2,4-trimethylhexan, 1,6-Diisocyanato-2,4,4-trimethylhexan, Xylylendi-isocyanat (XDI), Tetramethylxylylendiisocyanat (TMXDI), 1,3- und 1,4-Phenylendiisocyanat, 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische. Weiterhin kommen partiell oder vollständig hydrierte Cycloalkylderivate des MDI, beispielsweise vollständig hydriertes MDI (H12-MDI), alkylsubstituierte Diphenylmethandiisocyanate, beispielsweise Mono-, Di-, Tri- oder Tetraalkyldiphenylmethandiisocyanat sowie deren partiell oder vollständig hydrierte Cycloalkylderivate, 4,4'-Diisocyanatophenylperfluorethan, Phthalsäure-bis-isocyanatoethylester, 1-Chlormethylphenyl-2,4- oder -2,6-diisocyanat, 1-Brommethylphenyl-2,4- oder -2,6-diisocyanat, 3,3-Bis-chlormethylether-4,4'-diphenyldiisocyanat, schwefelhaltige Diisocyanate, wie sie durch Umsetzung von 2 mol Diisocyanat mit 1 mol Thiodiglykol oder Dihydroxydihexylsulfid erhältlich sind, die Diisocyanate der Dimerfettsäuren, oder Gemische aus zwei oder mehr der genannten Diisocyanate, in Frage.

Gegebenenfalls können bei der Herstellung des Hydroxyl-terminierten Polyurethan-Prepolymers noch monofunktionelle Verbindungen mit verwendet werden.

Erfindungsgemäß sind als monofunktionelle Verbindungen solche Verbindungen geeignet, die gegenüber Isocyanaten reaktive Gruppen mit einer Funktionalität von 1 haben. Grundsätzlich sind hierfür alle monofunktionellen Alkohole, Amine oder Mercaptane verwendbar, dies sind insbesondere monofunktionelle Alkohole mit bis zu 36 Kohlenstoffatomen, monofunktionelle primäre und/oder sekundäre Amine mit bis zu 36 Kohlenstoffatomen oder monofunktionelle Mercaptane mit bis zu 36 Kohlenstoffatomen. Es können aber auch Mischungen von Polyalkoholen, Polyaminen und/oder Polymercaptanen als monofunktionelle Verbindungen verwendet werden, solange deren durchschnittliche Funktionalität deutlich unter 2 liegt.

Besonders bevorzugt sind zum Beispiel Monoalkohole wie Benzylalkohol, Methanol, Ethanol, die Isomeren des Propanols, Butanols und Hexanols, Monoether von Ethylenglykol und/oder Diethylenglykol, sowie die durch Reduktion von Fettsäuren erhältlichen primären Alkohole mit 8 bis 18 C-Atomen wie Octanol, Decanol, Dodecanol, Tetradecanol, Hexadecanol und Octadecanol, insbesondere in Form technischer Gemische derselben. Monoalkohole mit 4 bis 18 C-Atomen sind bevorzugt, da sich die niedrigen Alkohole nur schwer wasserfrei herstellen lassen.

Weiterhin einsetzbar sind Monoalkylpolyetheralkohole unterschiedlichen Molekulargewichts, wobei ein Zahlenmittel des Molekulargewichts zwischen 1000 und 2000 bevorzugt ist. Ein bevorzugter Vertreter ist z. B. Monobutylpropylenglykol.

Es können auch gesättigte Fettalkohole mit bis zu 26 Kohlenstoffatomen eingesetzt werden, vorzugsweise solche mit bis zu 22 Kohlenstoffatomen, die großtechnisch durch Reduktion (Hydrierung) von Fettsäuremethylestem synthetisiert werden. Beispielhaft genannt seien: Capronalkohol, Caprylalkohol, Pelargonalkohol, Caprinalkohol, Laurinalkohol, Myristinalkohol, Cetylalkohol, Stearylalkohol, Gadoleylalkohol und Behenylalkohol oder die Guerbetalkohole 2-Hexyldecanol, 2-Octyldodecanol, 2-Decyltetradecanol, 2-Dodecylhexadecanol, 2-Tetradecyloctadecanol, 2-Hexadecyleicosanol, Guerbetalkohol aus Erucylalkohol, Behenylalkohol und Ocenolen.

Gegebenfalls können Gemische, resultierend aus der Guerbetisierung technischer Fettalkohole, zusammen mit den anderen vorgenannten Alkoholen, verwendet werden.

Der Anteil der monofunktionellen Verbindung(en) beträgt 0 bis 40 Molprozent, bezogen auf die Polyolmischung, besonders bevorzugt ist ein Anteil monofunktioneller Verbindung(en) von 15 bis 30 Molprozent

Der stöchiometrische Überschuss der Summe aus Polyolverbindungen und monofunktioneller Verbindung gegenüber der eingesetzten Diisocyanatverbindung oder Mischung aus Diisocyanaten beträgt 1,1 bis 2,0, vorzugsweise liegt erzwischen 1,2 und 1,5. Hierdurch ist sichergestellt, dass als Umsetzungsprodukt der Stufe A ein Polyurethan-Prepolymer mit endständigen Hydroxylgruppen gebildet wird.

Die nachfolgende Umsetzung der Hydroxyl-terminierten Polyurethan-Prepolymer-Mischung mit dem Isocyanatosilan zu dem silylierten Polyurethan erfolgt in der gleichen Weise wie oben für die direkte Umsetzung der Polyetherverbindung bestehend aus mindestens zwei Polyoxyalkylenblöcken A und B beschrieben.

Ein alternativer, urethanfreier Weg zu den silylierten Polymeren geht von den oben beschriebenen Polyetherblockcopolymeren mit A-B oder A-B-A Blöcken aus und sieht eine Umwandlung der OH-Endgruppen in endständige Allylgruppen mit Hilfe von Allylchlorid vor (Ethersynthese nach Williamson). Diese allylterminierten Polyetherblockcopolymeren können dann in bekannter Weise einer Hydrosilylierungsreaktion unterworfen werden, so dass Polyetherpolymere mit reaktiven Alkoxysilangruppen entstehen. Bevorzugt ist jedoch der Weg zu den vorgenannten silylierten Polyurethanverbindungen.

Die erfindungsgemäßen Kleb- und Dichtstoff-Zubereitungen können neben den vorgenannten silylierten Polyurethanverbindungen noch weitere Hilfs- und Zusatzstoffe enthalten, die diesen Zubereitungen verbesserte elastische Eigenschaften, verbesserte Rückstellfähigkeit, ausreichend lange Verarbeitungszeit, schnelle Durchhärtungsgeschwindigkeit und geringe Restklebrigkeit verleihen. Zu diesen Hilfs- und Zusatzstoffen gehören beispielsweise Weichmacher, Stabilisatoren, Antioxidantien, Füllstoffe, Reaktivverdünner, Trockenmittel, Haftvermittler und UV-Stabilisatoren, rheologische Hilfsmittel, Farbpigmente oder Farbpasten und/oder gegebenenfalls auch im geringen Umfang Lösungsmittel.

Als Weichmacher geeignet sind beispielsweise Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester (z.B. "Mesamoll", Alkylsulfonsäurephenylester, Fa. Bayer), Thiobuttersäureester, Trimellithsäureester, Zitronensäureester sowie Ester auf Nitrocellulose- und Polyvinylacetat-Basis, sowie Gemische aus zwei oder mehr davon. Besonders geeignet sind die asymmetrischen Ester von Adipinsäuremonooctylester mit 2-Ethylhexanol (Edenol DOA, Fa. Cognis Deutschland GmbH, Düsseldorf) oder auch Ester derAbietinsäure.

Beispielsweise eignen sich von den Phthalsäureestern Dioctylphthalat (DOP), Dibutylphthalat, Diisoundecylphthalat (DIUP) oder Butylbenzylphthalat (BBP) oder deren abgeleitete hydrierte Derivate, von den Adipaten Dioctyladipat (DOA), Diisodecyladipat, Diisodecylsuccinat, Dibutylsebacat oder Butyloleat.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis Deutschland GmbH, Düsseldorf).

Besonders bevorzugt sind jedoch endgruppenverschlossene Polyethylenglykole, wie Polyethylen- oder Polypropylenglykoldialkylether, wobei der Alkylrest ein bis vier C-Atome beträgt, und insbesondere die Dimethyl- und Diethylether von Diethylenglykol und Dipropylenglykol sowie Gemische aus zwei oder mehr davon. Insbesondere mit Dimethyldiethylenglykol wird auch unter ungünstigeren Auftragungsbedingungen (geringe Luftfeuchtigkeit, niedrige Temperatur) eine akzeptable Aushärtung erreicht. Für weitere Einzelheiten zu Weichmachern wird auf die einschlägige Literatur der Technischen Chemie verwiesen.

Weichmacher können in den Zubereitungen zwischen 0 und 40, vorzugsweise zwischen 0 und 20 Gew.% (bezogen auf die Gesamtzusammensetzung) in der Zubereitung mit verwendet werden.

Unter "Stabilisatoren" im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole wie z.B. Tinuvin 327 (Fa. Ciba Specialty Chemicals) und/oder Amine vom "HALS"-Typ (Hindered Amine Light Stabilizer), wie z.B. Tinuvin 770 (Fa. Ciba Specialty Chemicals). Es ist im Rahmen der vorliegenden Erfindung bevorzugt, wenn ein UV-Stabilisator eingesetzt wird, der eine Silylgruppe trägt und beim Vernetzen bzw. Aushärten in das Endprodukt eingebaut wird. Hierzu besonders geeignet sind die Produkte Lowilite 75, Lowilite 77 (Fa. Great Lakes, USA). Ferner können auch Benzotriazole, Benzophenone, Benzoate, Cyanacrylate, Acrylate, sterisch gehinderte Phenole, Phosphor und / oder Schwefel zugegeben werden. Die erfindungsgemäße Zubereitung kann bis zu etwa 2 Gew.-%, vorzugsweise etwa 1 Gew.-% an Stabilisatoren enthalten. Ferner kann die erfindungsgemäße Zubereitung weiterhin bis zu etwa 7 Gew.-%, insbesondere bis zu etwa 5 Gew.-% Antioxidantien enthalten.

Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen (Vernetzungsreaktion bzw. Haftvermittlungsfunktion) katalysieren können. Beispiele hierfür sind Titanate wie Tetrabutyltitanat und Tetrapropyltitanat, Zinncarboxylate wie Dibutylzinndilaulat (DBTL), Dibutylzinndiacetat, Dibutylzinndiethylhexanoat, Dibutylzinndioctoat, Dibutylzinndimethylmaleat, Dibutylzinndiethylmaleat, Dibutylzinndibutylmaleat, Dibutylzinndiiosooctylmaleat, Dibutylzinnditridecylmaleat, Dibutylzinndibenzylmaleat, Dibutylzinnmaleat, Dibutylzinndiacetat, Zinnoctaoat, Dioctylzinndistealeat, Dioctylzinndilaulat, Dioctylzinndiethylmaleat, Dioctylzinndiisooctylmaleat, Dioctylzinndiacetat, und Zinnnaphthenoat; Zinnalkoxide wie Dibutylzinndimethoxid, Dibutylzinndiphenoxid, und Dibutylzinndiisoproxid; Zinnoxide wie Dibutylzinnoxid, und Dioctylzinnoxid; Reaktionsprodukte zwischen Dibutylzinnoxiden und Phthalsäureestern, Dibutylzinnbisacetylacetonat; Organoaluminumverbindungen wie Aluminumtrisacetylacetonat, Aluminumtrisethylacetoacetat, und Diisopropoxyaluminum-ethylacetoacetat; Chelatverbindungen wie Zirconumtetraacetylacetonat, und Titantetraacetylacetonat; Bleioctanoat; Aminverbindungen oder ihre Salze mit Carbonsäuren, wie Butylamin, Octylamin, Laurylamin, Dibutylamine, Monoethanolamine, Diethanolamine, Triethanolamin, Diethylenetriamin, Triethylenetetramin, Oleylamine, Cyclohexylamin, Benzylamin, Diethylaminopropylamin, Xylylenediamin, Triethylenediamin, Guanidin, Diphenylguanidin, 2,4,6-tris(dimethylaminomethyl)phenol, Morpholin, N-methylmorpholin, 2-Ethyl-4-methylimidazole, und 1,8-Diazabicyclo-(5,4,0)-undecen-7 (DBU), ein niedermolekulares Polyamid Harz erhalten aus einem Überschuß eines Polyamins und einer Polybasischen Säure, Addukte aus einem Polyamin im Überschuß mit einem Epoxid, Silanhaftvermittler mit Aminogruppen, wie 3-Aminopropyltrimethoxysilan, und N-(β-aminoethyl)aminopropylmethyldimethoxysilan. Der Katalysator, bevorzugt Mischungen mehrerer Katalysatoren, werden in einer Menge von 0,01 bis etwa 5 Gew.-% bezogen auf das Gesamtgewicht der Zubereitung eingesetzt.

Die erfindungsgemäße Zubereitung kann zusätzlich Füllstoffe enthalten. Hier eignen sich beispielsweise Kreide, Kalkmehl, gefällte und/oder pyrogene Kieselsäure, Zeolithe, Bentonite, Magnesiumcarbonat, Kieselgur, Tonerde, Ton, Talkum, Titanoxid, Eisenoxid, Zinkoxid, Sand, Quarz, Flint, Glimmer, Glaspulver und andere gemahlene Mineralstoffe. Weiterhin können auch organische Füllstoffe eingesetzt werden, insbesondere Ruß, Graphit, Holzfasern, Holzmehl, Sägespäne, Zellstoff, Baumwolle, Pulpe, Baumwolle, Hackschnitzel, Häcksel, Spreu, gemahlene Walnussschalen und andere Faserkurzschnitte. Ferner können auch Kurzfasern wie Glasfaser, Glasfilament, Polyacrylnitril, Kohlefaser, Kevlarfaser oder auch Polyethylenfasern zugesetzt werden. Aluminiumpulver ist ebenfalls als Füllstoff geeignet.

Die pyrogenen und/oder gefällten Kieselsäuren weisen vorteilhaft eine BET-Oberfläche von 10 bis 90 m²/g auf. Bei Ihrer Verwendung bewirken sie keine zusätzliche Erhöhung der Viskosität der erfindungsgemäßen Zubereitung, tragen aber zu einer Verstärkung der gehärteten Zubereitung bei.

Es ist ebenso denkbar, pyrogene und/oder gefällte Kieselsäuren mit einer höheren BET-Oberfläche, vorteilhafterweise mit 100 - 250 m²/g, insbesondere 110 - 170 m²/g, als Füllstoff einzusetzen. Aufgrund der höheren BET-Oberfläche, kann man den gleichen Effekt, z.B. Verstärkung der gehärteten Zubereitung, bei einem geringeren Gewichtsanteil Kieselsäure erzielen. Somit kann man weitere Stoffe einsetzen, um die erfindungsgemäße Zubereitung hinsichtlich anderer Anforderungen zu verbessern.

Ferner eignen sich als Füllstoffe Hohlkugeln mit einer mineralischen Hülle oder einer Kunststoffhülle. Dies können beispielsweise Glashohlkugeln sein, die unter den Handelsbezeichnungen Glass Bubbles® kommerziell erhältlich sind. Hohlkugeln auf Kunststoffbasis, z.B. Expancel® oder Dualite®, werden beispielsweise in der EP 0 520 426 B1 beschrieben. Diese sind aus anorganischen oder organischen Stoffen zusammengesetzt, jede mit einem Durchmesser von 1 mm oder weniger, bevorzugt von 500 µm oder weniger.

Für manche Anwendungen sind Füllstoffe bevorzugt, die den Zubereitungen Thixotropie verleihen. Solche Füllstoffe werden auch als rheologische Hilfsmittel beschrieben, z. B. hydriertes Rizinusöl, Fettsäureamide oder quellbare Kunststoffe wie PVC. Um gut aus einer geeigneten Dosiervorrichtung (z. B. Tube) auspressbar zu sein, besitzen solche Zubereitungen eine Viskosität von 3.000 bis 150.000, vorzugsweise 40.000 bis 80.000 mPas oder auch 50.000 bis 60.000 mPas.

Die Füllstoffe werden vorzugsweise in einer Menge von 1 bis 80 Gew.-%, vorzugsweise von 5 bis 60 Gew.%, bezogen auf das Gesamtgewicht der Zubereitung eingesetzt.

Beispiele für geeignete Pigmente sind Titandioxid, Eisenoxide oder Ruß.

Häufig ist es sinnvoll, die erfindungsgemäßen Zubereitungen durch Trockenmittel weiter gegenüber eindringender Feuchtigkeit zu stabilisieren, um die Lagerbarkeit (shelf-life) noch weiter zu erhöhen, Es besteht gelegentlich auch Bedarf, die Viskosität des erfindungsgemäßen Kleb- oder Dichtstoffs für bestimmte Anwendungen durch Verwendung eines Reaktivverdünners zu erniedrigen. Als Reaktivverdünner kann man alle Verbindungen, die mit dem Kleb- oder Dichtstoff unter Verringerung der Viskosität mischbar sind und über mindestens eine mit dem Bindemittel reaktive Gruppe verfügen, einsetzen.

Als Reaktivverdünner kann man z.B. folgende Stoffe einsetzen: mit Isocyanatosilanen umgesetzte Polyalkylenglykole (z.B. Synalox 100-50B, DOW), Carbamatopropyltrimethoxysilan, Alkyltrimethoxysilan, Alkyltriethoxysilan, Methyltrimethoxysilan, Methyltriethoxysilan sowie Vinyltrimethoxysilan (Dynasylan VTMO, Fa. Evonik oder Geniosil XL 10, Fa. Wacker), Vinyltriethoxysilan, Phenyltrimethoxysilan, Phenyltriethoxysilan, Octyltrimethoxysilan, Tetraethoxysilan, Vinyldimethoxymethylsilan (XL12, Wacker), Vinyltriethoxysilan (GF56, Wacker), Vinyltriacetoxysilan (GF62, Wacker), Isooctyltrimethoxysilan (IO Trimethoxy), Isooctyltriethoxysilan (10 Triethoxy, Wacker), N-Trimethoxysilylmethyl-O-methylcarbamat (XL63, Wacker), N-Dimethoxy(methyl)silylmethyl-O-methyl-carbamat (XL65, Wacker), Hexadecyltrimethoxysilan, 3-Octanoylthio-1-propyltriethoxysilan, Aminosilane wie z.B. 3-Aminopropyltrimethoxysilan (Dynasylan AMMO, Fa. Evonik oder Geniosil GF96, Fa. Wacker) und Teilhydrolysate der vorgenannten Verbindungen.

Ferner sind ebenfalls folgende Polymere von Kaneka Corp. als Reaktivverdünner einsetzbar: MS S203H, MS S303H, MS SAT 010, und MS SAX 350.

Ebenso kann man silan-modifizierte Polyether verwenden, die sich z.B. aus der Umsetzung von Isocyanatosilan mit Synalox Typen ableiten.

In gleicher Weise können die erfindungsgemäßen Prepolymeren in Abmischung mit üblichen an sich bekannten Polymeren oder Prepolymeren, ggf. unter Mitverwendung der vorgenannten Reaktivverdünner, Füllstoffe und weiterer Hilf- und Zusatzstoffe, eingesetzt werden. "Übliche Polymere oder Prepolymere", können dabei ausgewählt werden aus Polyestern, Polyoxyalkylenen, Polyacrylaten, Polymethacrylaten oder deren Mischungen, wobei diese frei von mit Siloxangruppen reaktiven Gruppen sein können, aber ggf. auch Alkoxysilylgruppen oder Hydroxylgruppen aufweisen können.

Eine Vielzahl der vorgenannten silanfunktionellen Reaktivverdünner haben gleichzeitig eine trocknende und / oder haftvermittelnde Wirkung in der Zubereitung. Diese Reaktivverdünner werden in Mengen zwischen 0,1 und 15 Gew.%, vorzugsweise zwischen 1 und 5 Gew.%, bezogen auf die Gesamtzusammensetzung der Zubereitung, eingesetzt.

Als Haftvermittler eignen sich aber auch so genannte Klebrigmacher wie Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxidharzen in geringen Mengen kann bei manchen Substraten die Haftung verbessern. Hierfür werden dann vorzugsweise die festen Epoxidharze mit einem Molekulargewicht von über 700 in fein gemahlener Form eingesetzt. Falls Klebrigmacher als Haftvermittler eingesetzt werden, hängt deren Art und Menge von der Kleb- / Dichtstoffzusammensetzung ab sowie von dem Substrat, auf welches dieser appliziert wird. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.%, bezogen auf die Gesamtzusammensetzung der Zubereitung, verwendet.

Die Herstellung der erfindungsgemäßen Zubereitung erfolgt nach bekannten Verfahren durch inniges Vermischen der Bestandteile in geeigneten Dispergieraggregaten, z. B. Schnellmischer, Kneter, Planetenmischer, Planetendissolver, Innenmischer, so genannte "Banburymischer", Doppelschneckenextruder und ähnliche dem Fachmann bekannte Mischaggregate.

Eine bevorzugte Ausführungsform der erfindungsgemäßen Zubereitung kann enthalten:
- 5 bis 50 Gew.-%, bevorzugt 10 bis 40 Gew.-% einer oder mehrerer Verbindungen der erfindungsgemäßen silylierten Polyurethane,
- 0 bis 30 Gew.-%, bevorzugt weniger als 20 Gew.-%, besonders bevorzugt weniger als 10 Gew.-% Weichmacher,
- 0 bis 80 Gew.-%, bevorzugt 20 bis 60 Gew.-%, besonders bevorzugt 30 bis 55 Gew.-% Füllstoffe

Ferner kann die Ausführungsform weitere Hilfsstoffe enthalten.

Die Gesamtheit aller Bestandteile summiert sich zu 100 Gew.-%, wobei sich die Summe der oben aufgeführten Hauptbestandteile allein nicht zu 100 Gew.-% addieren muss.

Die erfindungsgemäßen silylierten Polyurethan-Prepolymere härten mit der umgebenden Luftfeuchtigkeit zu niedermoduligen Polymeren aus, so dass aus diesen Prepolymeren mit den vorgenannten Hilfs- und Zusatzstoffen niedermodulige, feuchtigkeitshärtende Kleb- und Dichtstoffzubereitungen herstellbar sind.

In den nachfolgenden Ausführungsbeispielen soll die Erfindung näher erläutert werden, wobei die Auswahl des Beispiels keine Beschränkung des Umfangs des Erfindungsgegenstandes darstellen soll.

### Beispiele

Bei der Herstellung der Polyole wurden Katalysatoren gemäß der Lehre der US 4477589 bzw. US4472560 (Methode A) bzw. gemäß der Lehre der CN 1459332 A (Methode B) verwendet. Nach der Herstellung der Blockcopolymeren vom Typ A-B-A wurden diese mit 300 ppm BHT zur Stabilisierung versetzt.

### Beispiel 1a Herstellung p-THF 1000 PPG 8000 (Methode A)

In einem 2 I Reaktor wurden 250 g Poly-THF (Mₙ 1000) vorgelegt und mit 100 ppm DMC - Katalysator, gemäß der Lehre der US 4477589 bzw. US4472560, versehen. Anschließend wurde zuerst Vakuum gezogen und dann bei 110°C mit 1750 g Propylenoxid beaufschlagt und nach der Zugabe eine halbe Stunde nachgerührt.

Das Produkt hat eine OHZ von 13,3 und eine Viskosität von 7.500 mPas

### Beispiel 1b Herstellung p-THF 1000 PPG 8000 (Methode B)

Es wurde wie unter 1 a beschrieben verfahren, jedoch unter Verwendung des DMC - Katalysators, gemäß der Lehre der CN 1459332 A.

Das Produkt hat eine OHZ von 13,8 und eine Viskosität von 5700 mPas

### Beispiel 2a Herstellung p-THF 1000 PPG 12000 (Methode A)

In einem 2 I Reaktor wurden 85 g Poly-THF (Mₙ 1000) vorgelegt und mit 100 ppm des DMC - Katalysators, gemäß der Lehre der US 4477589 bzw. US4472560, versehen. Anschließend wurde zuerst Vakuum gezogen und dann bei 110°C mit 1915 g Propylenoxid beaufschlagt und nach der Zugabe eine halbe Stunde nachgerührt.

Das Produkt hat eine OHZ von 10 und eine Viskosität von 6000 mPas

### Beispiel 2b Herstellung p-THF 1000 PPG 12000 (Methode B)

Es wurde wie unter 2a beschrieben verfahren, jedoch unter Verwendung des DMC - Katalysators, gemäß der Lehre der CN 1459332 A.

Das Produkt hat eine OHZ von 10 und eine Viskosität von 100000 mPas.

### Beispiel 3 Herstellung p-THF 2000 PPG 12000 (Methode A)

In einem 2 I Reaktor wurden 85 g Poly-THF (Mₙ 2000) vorgelegt und mit 200 ppm des DMC - Katalysators versehen. Anschließend wurde zuerst Vakuum gezogen und dann bei 110°C mit 1915 g Propylenoxid beaufschlagt und nach der Zugabe eine halbe Stunde nachgerührt.

Das Produkt hat eine OHZ von 10 und eine Viskosität von 9000 mPas.

### Beispiel 4 Herstellung PEG 1000 PPG 12000 (Methode A)

In einem 2 I Reaktor wurden 85 g PEG (Mₙ 1000) vorgelegt und mit 200 ppm des DMC Katalysators versehen. Anschließend wurde zuerst Vakuum gezogen und dann bei 110°C mit 1915 g Propylenoxid beaufschlagt und nach der Zugabe eine halbe Stunde nachgerührt.

Das Produkt hat eine OHZ von 14 und eine Viskosität von 5000 mPas.

### Silylierung der oben hergestellten Polyole mit Isocyanatosilanen

### Beispiel 5a

300 g (25 mmol) des Blockcopolymers 2a (OHZ = 10) wurden in einem 500 ml Dreihalskolben bei 80°C im Vakuum getrocknet. Unter Stickstoffatmosphäre wurde bei 80°C 0,07 g Dibutylzinndilaurat hinzugegeben. Hierzu wurden 12,3 g (60 mmol) 3-Isocyanatopropyltrimethoxysilan (Geniosil GF 40) zugegeben und eine Stunde bei 80°C gerührt. Die entstandene Prepolymerenmischung wurde abgekühlt und mit 7,0 g Geniosil XL 63 und 5,3 g einer Mischung aus 70 Gew.-% Bis(1,2,2,6,6-pentamethyl-4-piperidyl)sebacat und 30 Gew.-% Methyl-1,2,2,6,6-pentamethyl-4-piperidylsebazat (Tinuvin 765) versetzt. Das Produkt wurde feuchtigkeitsdicht unter Stickstoffatmosphäre in einem Glasgefäß gelagert, bevor es gemäß der allgemeinen Vorschrift zu einer härtbaren Zusammensetzung weiterverarbeitet wurde.

### Beispiel 5b

Es wurde verfahren, wie in Beispiel 5a beschrieben, jedoch wurde das Blockcopolymer aus Beispiel 2 b verwendet.

### Beispiel 6

300 g (25 mmol) des Blockcopolymers (OHZ = 10) aus E eispiel 2 b wurden in einem 500 ml Dreihalskolben bei 80°C im Vakuum getrocknet. Unter Stickstoffatmosphäre wurde bei 80°C 0,07 g Dibutylzinndilaurat hinzugegeben. Hierzu wurden erst 4,0 g (25 mmol) 1-Isocyanatomethylmethyldimethoxysilan (Geniosil XL 42) dosiert, 10 Minuten nachgerührt und dann 7,1 g (35 mmol) 3-Isocyanatopropyltrimethoxysilan (Geniosil GF 40) zugegeben und eine Stunde bei 80°C gerührt. Die entstandene Prepolymerenmischung wurde abgekühlt und mit 7,0 g Geniosil XL 63 und 5,3 g einer Mischung aus 70 Gew.-% Bis(1,2,2,6,6-penta-4-piperidyl) sebacat und 30 Gew.-% Methyl-1,2,2,6,6-pentamethyl-4-piperidylsebazat (Tinuvin 765) versetzt. Das Produkt wurde feuchtigkeitsdicht unter Stickstoffatmosphäre in einem Glasgefäß gelagert, bevor es gemäß der allgemeinen Vorschrift zu einer härtbaren Zusammensetzung weiterverarbeitet wurde.

### Beispiel 7

Es wurde verfahren, wie in Beispiel 5a beschrieben, jedoch wurde das Blockcopolymer aus Beispiel 3 verwendet.

### Beispiel 8

Es wurde verfahren, wie in Beispiel 6 beschrieben, jedoch wurde das Blockcopolymer aus Beispiel 3 verwendet.

### Beispiel 9 (nicht erfindungsgemäß)

300 g (38 mmol) des Blockcopolymers (OHZ = 14) aus Beispiel 4 wurden in einem 500 ml Dreihalskolben bei 80°C im Vakuum getrocknet. Unter Stickstoffatmosphäre wurde bei 80°C 0,07 g Dibutylzinndilaurat hinzugegeben. Hierzu wurden 18,5 g (90 mmol) 3-Isöcyanatopropyltrimethoxysilan (Geniosil GF 40) zugegeben und eine Stunde bei 80°C gerührt. Die.entstandene Prepolymerenmischung wurde abgekühlt und mit 7,0 g Geniosil XL 63 und 5,3 g einer Mischung aus 70 Gew.-% Bis(1,2,2,6,6-pentamethyl-4-piperidyl)sebacat und 30 Gew.-% Methyl-1,2,2,6,6-pentamethyl-4-piperidylsebazat (Tinuvin 765) versetzt. Das Produkt wurde feuchtigkeitsdicht unter Stickstoffatmosphäre in einem Glasgefäß gelagert, bevor es gemäß der allgemeinen Vorschrift zu einer härtbaren Zusammensetzung weiterverarbeitet wurde.

### Allgemeine Vorschrift zur Herstellung der erfindungsgemäßen härtbaren Kleb-/Dichtstoff-Zubereitungen.

27,40 Gewichtsteile der in den Beispielen 5 bis 9 hergestellten Polymermischung wurden in einem Rührkessel mit 20 Gewichtsteilen Mesamoll mittels eines Speedmixers 30 s innig vermengt.

In die so erhaltene Mischung wurden nacheinander 45,05 Gewichtsteile Calciumcarbonat (Omya 302, "ultrafine ground calcium carbonate"), 1,5 Teile Vinyltrimethoxysilan ("VTMO", Wacker Geniosil XL10), 1,0 Gewichtsteile 3-Aminopropyltrimethoxisilan ("AMMO", Wacker Geniosil GF96) sowie 0,05 Gewichtsteile Dibutylzinndilaurat eingebracht und das so entstandene Gemenge für 30 s in einem Speedmixer innig vermischt.

### Prüfbedingungen

Von diesen Mischungen wurden Zugscherfestigkeiten an Holz/Holz-, Holz/Aluminium- und Holz/PMMA-Verklebungen ermittelt. Die Verklebten. Prüfkörper wurden vor dem Zugversuch 7 Tage im Normklima (23°C, 50% relative Luftfeuchtigkeit) gelagert.

Weiterhin Wurden die oben genannten Mischungen mit.einer Schichtstärke von 2 mm auf mit Polyetherfolie bespannte Glasplatten aufgetragen. Aus diesen Filmen wurden nach 7 Tagen Lagerung (23°C, 50% relative Luftfeuchtigkeit) Probenkörper (S2-Prüfkörper) ausgestanzt und die mechanischen Daten (E-Module bei 50 und 100% Dehnung, Bruchdehnung, Zugfestigkeit und Rückstellvermögen) in Anlehnung an DIN EN 27389 und DIN EN 28339 bestimmt.

Die Ergebnisse der erfindungsgemäß hergestellten härtbaren Kleb-/Dichtstoffzubereitungen sind in der nachfolgenden Tabelle 1 denen einer härtbaren Kleb-/Dichtstoffzubereitung gemäß Stand der Technik gegenübergestellt.

Wie aus den Festigkeitswerten ersichtlich, zeichnen sich die erfindungsgemäßen Kleb-/Dichtstoffzubereitungen bei vergleichbaren E-Moduli und Bruchdehnungen gegenüber dem Vergleichsbeispiel durch höhere Zugscherfestigkeiten insbesondere bei Verklebung unterschiedlicher Substrate (Holz/Aluminium bzw. Holz/PMMA) aus

**Tabelle 1**

| **Beispiel** | **10** | **11** | **12** | **13** | **14** | **15** | **16** |
|---|---|---|---|---|---|---|---|
| Polymer gemäß Stand d. Technik ¹⁾ | 27,40 | | | | | | |
| Polymer aus Beispiel 5b | | 27,40 | | | | | |
| Polymer aus Beispiel 6 | | | 27,40 | | | | |
| Polymer aus Beispiel 5a | | | | 27,40 | | | |
| Polymer aus Beispiel 7 | | | | | 27,40 | | |
| Polymer aus Beispiel 8 | | | | | | 27,40 | |
| Polymer aus Beispiel 9 | | | | | | | 27,40 |
| Mesamoll | 15,00 | 15,00 | 15,00 | 15,00 | 15,00 | 15,00 | 15,00 |
| Omyabond 302 | 55,05 | 55,05 | 55,05 | 55,05 | 55,05 | 55,05 | 55,05 |
| VTMO XL 10 | 1,50 | 1,50 | 1,50 | 1,50 | 1,50 | 1,50 | 1,50 |
| AMMO GF 96 | 1,00 | 1,00 | 1,00 | 1,00 | 1,00 | 1,00 | 1,00 |
| Silopren Katalysator 162 (DBTL) | 0,05 | 0,05 | 0,05 | 0,05 | 0,05 | 0,05 | 0,05 |
| Ergebnisse | | | | | | | |
| Bruch in N/mm² | 2,59 | 2,91 | 2,57 | 2,93 | 3,07 | 2,64 | 2,64 |
| Dehnung in% | 102 | 106 | 113 | 101 | 110 | 136 | 105 |
| E-50 N/mm² | 1,77 | 1,70 | 1,51 | 1,64 | 1,71 | 1,22 | 1,62 |
| E-100 N/mm² | 2,57 | 2,85 | 2,52 | 2,95 | 2,91 | 2,20 | 2,90 |
| Festigkeiten [N/mm²] | | | | | | | |
| Holz / Holz | 4,55 | 5,25 | 4,57 | 4,93 | 4,81 | 4,48 | 4,78 |
| Holz / Aluminium | 2,59 | 4,92 | 4,60 | 4,94 | 5,19 | 4,31 | 4,87 |
| Holz / PMMA | 1,80 | 3,59 | 3,72 | 2,35 | 2,74 | 3,20 | 2,80 |

### Anmerkung 1)

Silyliertes Polyetherurethan aus einem Polypropylenglycol 18000 (Diol) und 3-Isocyanatopropyltrimethoxysilan.

## Patentansprüche

1. Verfahren zur Herstellung eines silylierten Polyurethans, umfassend das Umsetzen mindestens einer Polyetherverbindung mit einer OH Zahl nach DIN 53783 zwischen 3 und 20 mg KOH/g, bestehend aus mindestens zwei Polyoxyalkylenblöcken A und B, wobei sich die Anzahl der Kohlenstoffatome in den Alkyleneinheiten der Blöcke A und B um mindestens 1 unterscheidet, mit einem oder mehreren Isocyanatosilanen der Formel (I):
OCN-R-Si-(R¹)ₘ(-OR²)₃₋ₘ (I)
worin m gleich 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, um die Hydroxylgruppen der Polyetherverbindung mit dem Isocyanatosilan zu verkappen,
**dadurch gekennzeichnet, dass** der erste Polyetherblock B Polyoxytetramethylen- und der zweite Block A Polyoxypropyleneinheiten enthält.

2. Verfahren nach Anspruch 1, **dadurch gekennzeichnet, dass** die Polyetherverbindung eine OH Zahl zwischen 6 und 12 mg KOH/g aufweist.

3. Verfahren nach mindestens einem der Ansprüche 1 bis 2, **dadurch gekennzeichnet, dass** die Polyetherverbindung eine Triblockstruktur vom Typ A-B-A aufweist.

4. Verfahren nach mindestens einem der Ansprüche 1 bis 3, **dadurch gekennzeichnet, dass** das oder die Polyetherblockcopolymer(en) in einem ersten Schritt mit einem Diisocyanat bei einem stöchiometrischen Überschuss der Polyolverbindung(en) gegenüber der Diisocyanatverbindung zu einem Polyurethan-Prepolymer umgesetzt werden, das Hydroxyl-terminiert ist, welches in einem zweiten Schritt mit einem oder mehreren Isocyanatosilanen der Formel (I):
OCN-R-Si-(R¹)ₘ(-OR²)₃₋ₘ (I)
worin in 0, 1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, umgesetzt wird, um die Hydroxylgruppen der Polyetherverbindung mit dem Isocyanatosilan zu verkappen.

5. Verfahren nach mindestens einem der Ansprüche 1 bis 4, wobei R ein difunktionelle gerader oder verzweigter Alkylrest mit 2 bis 6 Kohlenstoffatomen ist und / oder m null oder eins ist.

6. Verfahren nach mindestens einem der Ansprüche 4 bis 5, **dadurch gekennzeichnet, dass** die Polyolmischung zusätzlich mindestens eine gegenüber Isocyanaten monofunktionelle Verbindung ausgewählt aus Monoalkoholen, Monomercaptanen, Monoaminen oder deren Mischungen enthält und der Anteil der monofunktionellen Verbindung 1 bis 40 Mol%, vorzugsweise 1 bis 20 Mol%, der Mischung aus Polyol und der monofunktionellen Verbindung beträgt.

7. Verfahren nach mindestens einem der Ansprüche 1 bis 6, wobei das Isocyanatosilan der Formel (I) 3-Isocyanatopropyl-trimethoxysilan oder 3-Isocyanatopropyl-triethoxysilan ist.

8. Silyliertes Polyurethan, hergestellt durch ein Verfahren umfassend das Umsetzen mindestens einer Polyetherverbindung mit einer OH Zahl nach DIN 53783 zwischen 3 und 20 mg KOH/g bestehend aus mindestens zwei Polyoxyalkylenblöcken A und B, wobei sich die Anzahl der Kohlenstoffatome in den Alkyleneinheiten der Blöcke A und B um mindestens 1 unterscheidet, mit einem öder mehreren Isocyanatosilanen der Formel (I):
OCN-R-Si-(R¹)ₘ(-OR²)₃₋ₘ (I)
worin m gleich 0,1 oder 2 ist, jedes R² ein Alkylrest mit 1 bis 4 Kohlenstoffatomen ist, jedes R¹ ein Alkylrest mit 1 bis 4 Kohlenstoffatomen ist und R eine difunktionelle organische Gruppe ist, um die Hydroxylgruppen des Prepolymers mit dem Isocyanatosilan zu verkappen,
**dadurch gekennzeichnet, dass** der erste Polyetherblock B Polyoxytetramethylen- und der zweite Block A Polyoxypropyleneinheiten enthält.

9. Silyliertes Polyurethan nach Anspruch 8, **dadurch gekennzeichnet, dass** die Polyetherverbindung eine ÖH Zahl zwischen 6 und 12 mg KOH/g aufweist und / oder m null oder eins ist.

10. Silyliertes Polyurethan nach mindestens einem der Ansprüche 8 bis 9, wobei das Isocyanatosilan der Formel (1) 3-Isocyanatopropyl-trimethoxysilan oder 3-Isocyanatopropyl-triethoxysilan ist.

11. Silyliertes Polyurethan hergestellt nach einem Verfahren nach mindestens einem der Ansprüche 4 bis 7, wobei die Diisocyanatverbindung gewählt ist aus der Gruppe bestehend aus 2,4-Toluol-diisocyanat, 2,6-Toluol-diisocyanat, 4,4'-Diphenylmethandiisocyanat, 2,4'-Diphenyl-methandiisocyanat, 1-Isocyanato-3,3,5-trimethyl-5-isocyanatomethylcyclohexan (Isophorondiisocyanat, IPDI), 4,4'-Dicyclohexylmethandiisocyanat-Isomeren, Tetramethylxylylendiisocyanat (TMXDI), und Mischungen davon.

12. Silyliertes Polyurethan nach Anspruch 11, **dadurch gekennzeichnet, dass** die Polyolmischung zusätzlich mindestens eine gegenüber Isocyanaten monofunktionelle Verbindung ausgewählt aus Monoalkoholen, Monomercaptanen, Monoaminen oder deren Mischungen enthält und der Anteil der monofunktionellen Verbindung 1 bis 40 Mol%, vorzugsweise 1 bis 20 Mol%, der Mischung aus Polyol und der monofunktionellen Verbindung beträgt.

13. Verwendung einer Zubereitung enthaltend ein oder mehrere silylierte(s) Polyurethan(e) nach mindestens einem der Ansprüche 8 bis 10 öder 11 als Klebstoff, Dichtstoff oder Beschichtungsmittel.

## Claims

1. Method for producing a silylated polyurethane, comprising reacting at least one polyether compound having an OH number between 3 and 20 mg KOH/g according to DIN 53783, consisting of at least two polyoxyalkylene blocks A and B, wherein the number of carbon atoms in the alkylene units of blocks A and B differs by at least 1, with one or more isocyanatosilanes of formula (I):
OCN-R-Si-(R¹)ₘ(-OR²)₃₋ₘ (I)
wherein m is 0, 1, or 2, each R² is an alkyl radical with 1 to 4 carbon atoms, each R¹ is an alkyl radical with 1 to 4 carbon atoms, and R is a difunctional organic group, to cap the hydroxyl groups of the polyether compound with the isocyanatosilane,
**characterized in that**
the first polyether block B contains polyoxytetramethylene units, and the second block A contains polyoxypropylene units.

2. Method according to Claim 1, **characterized in that** the polyether compound has an OH number between 6 and 12 mg KOH/g.

3. Method according to at least one of Claims 1 to 2, **characterized in that** the polyether compound has a type A-B-A triblock structure.

4. Method according to at least one of Claims 1 to 3, **characterized in that** in a first step the polyether block copolymer(s) is/are reacted with a diisocyanate at a stoichiometric excess of the polyol compound(s) with respect to the diisocyanate compound, to produce a polyurethane prepolymer that is terminal hydroxylated, which in a second step is reacted with one or more isocyanatosilanes of formula (I):
OCN-R-Si-(R¹)ₘ(-OR²)₃₋ₘ (I)
wherein m is 0, 1, or 2, each R² is an alkyl radical with 1 to 4 carbon atoms, each R¹ is an alkyl radical with 1 to 4 carbon atoms, and R is a difunctional organic group, to cap the hydroxyl groups of the polyether compound with the isocyanatosilane.

5. Method according to at least one of Claims 1 to 4, wherein R is a difunctional straight or branched alkyl radical with 2 to 6 carbon atoms, and/or m is zero or one.

6. Method according to at least one of Claims 4 to 5, **characterized in that** the polyol mixture additionally contains at least one compound which is monofunctional with respect to isocyanates, selected from monoalcohols, monomercaptans, monoamines, or mixtures thereof, and the proportion of the monofunctional compound is 1 to 40 mol-%, preferably 1 to 20 mol-%, of the mixture of polyol and the monofunctional compound.

7. Method according to at least one of Claims 1 to 6, wherein the isocyanatosilane of formula (I) is 3-isocyanatopropyltrimethoxysilane or 3-isocyanatopropyltriethoxysilane.

8. Silylated polyurethane produced by a method comprising reacting at least one polyether compound having an OH number between 3 and 20 mg KOH/g according to DIN 53783, consisting of at least two polyoxyalkylene blocks A and B, wherein the number of carbon atoms in the alkylene units of blocks A and B differs by at least 1, with one or more isocyanatosilanes of formula (I):
OCN-R-Si-(R¹)ₘ(-OR²)₃₋ₘ (I)
wherein m is 0, 1, or 2, each R² is an alkyl radical with 1 to 4 carbon atoms, each R¹ is an alkyl radical with 1 to 4 carbon atoms, and R is a difunctional organic group, to cap the hydroxyl groups of the prepolymer with the isocyanatosilane,
**characterized in that**
the first polyether block B contains polyoxytetramethylene units, and the second block A contains polyoxypropylene units.

9. Silylated polyurethane according to Claim 8, **characterized in that** the polyether compound has an OH number between 6 and 12 mg KOH/g, and/or m is zero or one.

10. Silylated polyurethane according to at least one of Claims 8 to 9, wherein the isocyanatosilane of formula (I) is 3-isocyanatopropyltrimethoxysilane or 3-isocyanatopropyltriethoxysilane.

11. Silylated polyurethane produced by a method according to at least one of Claims 4 to 7, wherein the diisocyanate compound is selected from the group comprising 2,4-toluene diisocyanate, 2,6-toluene diisocyanate, 4,4'-diphenylmethane diisocyanate, 2,4'-diphenylmethane diisocyanate, 1-isocyanato-3,3,5-trimethyl-5-isocyanatomethylcyclohexane (isophorone diisocyanate, IPDI), 4,4'-dicyclohexylmethane diisocyanate isomers, tetramethylxylylene diisocyanate (TMXDI), and mixtures thereof.

12. Silylated polyurethane according to Claim 11, **characterized in that** the polyol mixture additionally contains at least one compound which is monofunctional with respect to isocyanates, selected from monoalcohols, monomercaptans, monoamines, or mixtures thereof, and the proportion of the monofunctional compound is 1 to 40 mol-%, preferably 1 to 20 mol-%, of the mixture of polyol and the monofunctional compound.

13. Use of a preparation containing one or more silylated polyurethane(s) according to at least one of Claims 8 to 10 or 11 as an adhesive, sealant, or coating agent.

## Revendications

1. Procédé de production d'un polyuréthane silylé, comprenant mise en réaction d'au moins un composé polyéther d'indice OH selon la norme DIN 53783 compris entre 3 et 20 mg de KOH/g, constitué d'au moins deux séquences polyoxyalkylènes A et B, le nombre d'atomes de carbone dans les unités alkylène des séquences A et B différant d'au moins 1, avec un ou plusieurs isocyanatosilanes de formule (I):
OCN-R-Si-(R¹)ₘ(-OR²)₃₋ₘ (I)
où m est 0, 1 ou 2, chaque R² est un groupe alkyle comportant 1 à 4 atomes de carbone, chaque R¹ est un groupe alkyle comportant 1 à 4 atomes de carbone et R est un groupe organique difonctionnel, pour coiffer les groupes hydroxyle du composé polyéther avec l'isocyanatosilane,
**caractérisé en ce que** la première séquence polyéther B contient des unités polyoxytétraméthylène et la seconde séquence A contient des unités polyoxypropylène.

2. Procédé selon la revendication 1, **caractérisé en ce que** le composé polyéther a un indice OH compris entre 6 et 12 mg de KOH/g.

3. Procédé selon l'une au moins des revendications 1 à 2, **caractérisé en ce que** le composé polyéther a une structure à trois séquences de type A-B-A.

4. Procédé selon l'une au moins des revendications 1 à 3, **caractérisé en ce que** l'on fait réagir le copolymère ou les copolymères à trois séquences de polyéther dans une première étape avec un diisocyanate avec un excès stoechiométrique de composé(s) polyol par rapport au composé diisocyanate pour donner un prépolymère de polyuréthane à terminaison hydroxyle que l'on fait réagir dans une seconde étape avec un ou plusieurs isocyanatosilanes de la formule (I):
OCN-R-Si-(R¹)ₘ(-OR²)₃₋ₘ (I)
où m est 0, 1 ou 2, chaque R² est un groupe alkyle comportant 1 à 4 atomes de carbone, chaque R¹ est un groupe alkyle comportant 1 à 4 atomes de carbone et R est un groupe organique difonctionnel, pour coiffer les groupes hydroxyle du composé polyéther avec l'isocyanatosilane,

5. Procédé selon l'une au moins des revendications 1 à 4, dans lequel R est un groupe alkyle difonctionnel linéaire ou ramifié comportant 2 à 6 atomes de carbone, et/ou m est zéro ou un.

6. Procédé selon l'une au moins des revendications 4 à 5, **caractérisé en ce que** le mélange de polyols contient en outre au moins un composé monofonctionnel par rapport aux isocyanates choisi parmi les monoalcools, les captanes monomères, les monoamines ou leurs mélanges, et la proportion du composé monofonctionnel est de 1 à 40% molaires, de préférence 1 à 20% molaires du mélange de polyols et du composé monofonctionnel.

7. Procédé selon l'une au moins des revendications 1 à 6, dans lequel l'isocyanatosilane de la formule (I) est le 3-isocyanatopropyl-triméthoxysilane ou le 3-isocyanatopropyltriéthoxysilane.

8. Polyuréthane silylé, produit par un procédé comprenant la mise en réaction d'au moins un composé polyéther d'indice OH selon la norme DIN 53783 compris entre 3 et 20 mg de KOH/g, constitué d'au moins deux séquences polyoxyalkylènes A et B, le nombre d'atomes de carbone dans les unités alkylène des blocs A et B différant d'au moins 1, avec un ou plusieurs isocyanatosilanes de formule (I):
OCN-R-Si-(R¹)ₘ(-OR²)₃₋ₘ (I)
où m est 0, 1 ou 2, chaque R² est un groupe alkyle comportant 1 à 4 atomes de carbone, chaque R¹ est un groupe alkyle comportant 1 à 4 atomes de carbone et R est un groupe organique difonctionnel, pour coiffer les groupes hydroxyle du composé polyéther avec l'isocyanatosilane,
**caractérisé en ce que** la première séquence de polyéther B contient des unités polyoxytétraméthylène et la seconde séquence A contient des unités polyoxypropylène.

9. Polyuréthane silylé selon la revendication 8, **caractérisé en ce que** le composé polyéther a un indice OH compris entre 6 et 12 mg de KOH/g.

10. Polyuréthane silylé selon l'une au moins des revendications 8 à 9, dans lequel l'isocyanatosilane de la formule (I) est le 3-isocyanatopropyl-triméthoxysilane ou le 3-isocyanatopropyl-triéthoxysilane.

11. Polyuréthane silylé produit par un procédé selon l'une au moins des revendications 4 à 7, dans lequel le composé diisocyanate est choisi dans le groupe constitué par le 2,4-toluol-diisocyanate, le 2,6-toluol-diisocyanate, le diisocyanate de 4,4'-diphénylméthane, le diisocyanate de 2,4'-diphényl-méthane, le 1-isocyanato-3,3,5-triméthyl-5-isocyanatométhylcyclohexane (diisocyanate d'isophorone, IPDI), les isomères du diisocyanate de 4,4'-dicyclohexylméthane, le diisocyanate de tétraméthylxylylène (TMXDI) et leurs mélanges.

12. Polyuréthane silylé selon la revendication 11, **caractérisé en ce que** le mélange de polyols contient en outre au moins un composé monofonctionnel par rapport aux isocyanates choisi parmi les monoalcools, les captanes monomères, les monoamines ou leurs mélanges, et la proportion du composé monofonctionnel est de 1 à 40% molaires, de préférence 1 à 20% molaires du mélange de polyols et du composé monofonctionnel.

13. Utilisation d'une préparation contenant un ou plusieurs polyuréthanes silylés selon l'une au moins des revendications 8 à 10 ou 11 comme adhésif, matière d'étanchéité ou agent de revêtement.
